# FASCICULE DE BREVET EUROPEEN

(11) **EP 3 956 223 B1**
(45) Date de publication et mention de la délivrance du brevet: **20.09.2023**
(21) Numéro de dépôt: 20715927.8
(22) Date de dépôt: 08.04.2020
(51) Int. Cl.: B64D 29/00, B64D 33/02, F02C 7/042, F02K 1/64

(54) **TURBORÉACTEUR COMPRENANT UNE NACELLE AVEC UNE ENTRÉE D'AIR POUR FAVORISER UNE PHASE D'INVERSION DE POUSSÉE**
TURBOFANTRIEBWERK UMFASSEND EINER GONDEL MIT EINEM LUFTEINLASS UM EINE SCHUBUMKEHRPHASE ZU BESSERN
TURBOREACTOR COMPRISING A NACELLE WITH AN AIR INTAKE FOR IMPROVING A REVERSE THRUST PHASE

(30) Priorité: 17.04.2019 FR 1904092
(43) Date de publication de la demande: 23.02.2022
(73) Titulaire: SAFRAN AIRCRAFT ENGINES, 75015 Paris (FR)
(72) Inventeur: MINCU, Daniel-Ciprian, 77550 MOISSY-CRAMAYEL (FR); LALLIA, Mathieu, Patrick, Jean-Louis, 77550 MOISSY-CRAMAYEL (FR); SIRVIN, Nicolas, Joseph, 77550 MOISSY-CRAMAYEL (FR); WOROTYNSKA, Jagoda, Alina, 77550 MOISSY-CRAMAYEL (FR); DAUTREPPE, Frédéric, 77550 MOISSY-CRAMAYEL (FR)
(74) Mandataire: Argyma
(86) Numéro de dépôt international: PCT/EP2020/060035
(87) Numéro de publication internationale: WO 2020/212226

(56) Documents cités:
- WO-A2-2015/130384
- GB-A- 1 228 806
- GB-A- 1 565 212
- US-A- 3 446 223
- US-A- 3 662 556
- US-A- 4 482 114

## Description

### DOMAINE TECHNIQUE DE L'INVENTION

La présente invention concerne le domaine des turboréacteurs d'aéronef et vise plus particulièrement un turboréacteur d'aéronef.

De manière connue, un aéronef comporte un ou plusieurs turboréacteurs pour permettre sa propulsion par accélération d'un flux d'air qui circule d'amont en aval dans le turboréacteur.

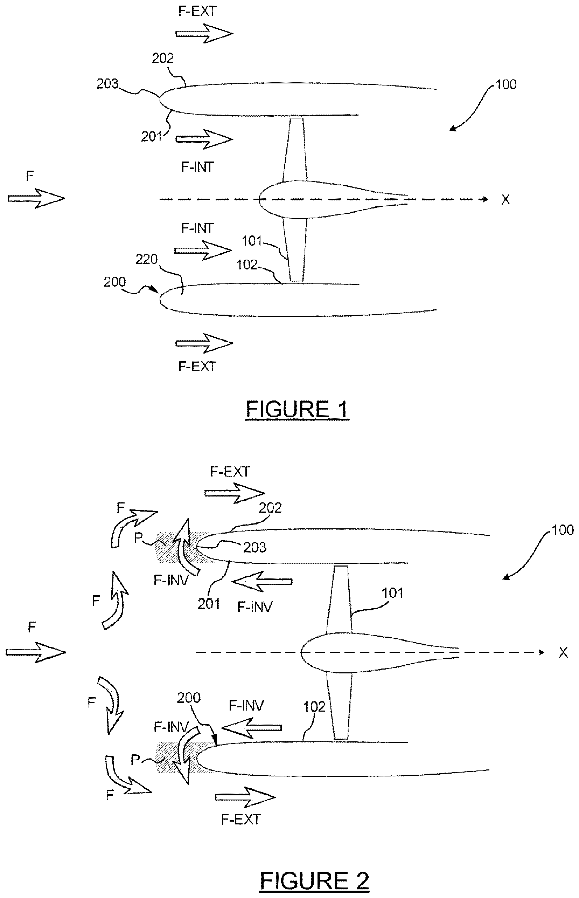

En référence à la figure 1, il est représenté un turboréacteur 100 s'étendant selon un axe X et comportant une soufflante 101 montée rotative autour de l'axe X dans une virole extérieure 102 afin d'accélérer, lors de la phase de poussée du turboréacteur 100, un flux d'air circulant d'amont vers l'aval dans le turboréacteur 100, dit flux d'air intérieur F-INT. Par la suite, les termes « amont » et « aval » sont définis par rapport à la circulation du flux d'air intérieur F-INT.

De manière connue, le turboréacteur 100 comprend une nacelle comportant à son extrémité amont une entrée d'air 200 comportant une paroi intérieure 201 tournée vers l'axe X et une paroi extérieure 202 opposée à la paroi intérieure 201. La paroi intérieure 201 et la paroi extérieure 202 sont reliées entre elles par une lèvre d'entrée d'air 203, comprenant un bord d'attaque, de manière à former une cavité annulaire 220. L'entrée d'air 200 possède un profil aérodynamique qui permet de séparer un flux d'air amont F entre le flux d'air intérieur F-INT guidé par la paroi intérieure 201 et un flux d'air extérieur F-EXT guidé par la paroi extérieure 202. Par la suite, les termes « intérieur » et « extérieur » sont définis radialement par rapport à l'axe X du turboréacteur 100.

Pour réduire la distance de freinage d'un aéronef, notamment lors de l'atterrissage, il est connu d'intégrer dans une nacelle un système d'inversion de poussée qui permet de modifier l'orientation du flux d'air à l'échappement de manière à réaliser une phase d'inversion de poussée. De manière connue, la phase d'inversion de poussée est réalisée de manière connue par une ouverture de trappes/grilles dans la veine secondaire, en aval des raidisseurs, afin de conduire les flux d'air vers l'extérieur de manière radiale ou vers l'amont.

Pour un turboréacteur à fort taux de dilution, la nacelle possède un diamètre important et il n'est pas souhaité d'intégrer un système d'inversion de poussée classique étant donné que cela pénaliserait de manière importante la masse, l'encombrement et la trainée du turboréacteur.

Pour permettre une phase d'inversion de poussée, une autre solution consiste à prévoir une soufflante à pas variable, connue sous son abréviation anglaise « Variable Pitch Fan » ou VPF de manière à permettre d'inverser le flux d'air circulant dans la veine secondaire d'un turboréacteur et ainsi de créer une poussée inverse permettant la décélération de l'aéronef lors de l'atterrissage ou lors de toutes autres manoeuvres.

En référence à la figure 2, lors de la phase d'inversion de poussée, un flux d'air inverse F-INV circule d'aval en amont dans le turboréacteur 100, c'est-à-dire, inversement au flux d'air intérieur F-INT de la figure 1. Plus précisément, le flux d'air inverse F-INV circule au voisinage de la virole extérieure 102. Le flux d'air inverse F-INV est guidé vers l'amont par la paroi intérieure 201 dans une direction sensiblement axiale par rapport à l'axe X. Ce flux d'air inverse F-INV s'oppose alors au flux d'air amont F, ce qui permet la phase d'inversion de poussée.

En pratique, comme illustré à la figure 2, une partie du flux d'air inverse F-INV contourne le profil aérodynamique de l'entrée d'air 200 selon une direction sensiblement radiale, ce qui entraîne l'apparition d'une zone de dépression locale P au voisinage de la lèvre d'entrée d'air 203. Une telle dépression locale P génère une aspiration vers l'amont, c'est-à-dire, une force qui s'oppose à l'inversion de poussée. Dans les faits, ce phénomène réduit les performances de la phase d'inversion de poussée de manière très importante.

L'invention vise ainsi à réduire ce phénomène afin d'augmenter les performances du turboréacteur lors de la phase d'inversion de poussée sans affecter les performances dudit aéronef lors de la phase de poussée.

On connaît dans l'art antérieur par les brevets US 3 618 876, US 3 222 863 et US 3 664 612 une entrée d'air dont la partie amont pivote vers l'intérieur ou vers l'extérieur ou se déplace vers l'amont. Une telle partie amont crée plusieurs conduites de circulation débouchant d'une part sur l'extrados (paroi extérieure) et d'autre part sur l'intrados (paroi intérieure), afin d'éviter un décollement du flux d'air intérieur de la paroi intérieure en conditions défavorables, notamment lors du décollage ou avec un vent de biais. Une telle partie amont mobile ne favorise pas la phase d'inversion de poussée.

Il est également connu par les demandes de brevet US3446223A1, US3662556A1 et GB1228806A1 une entrée d'air avec des ouvertures traversantes entre la paroi intérieure et la paroi extérieure fermées par des clapets, qui sont ouverts dans certaines conditions d'opérabilité en phase de poussée pour réduire le bruit ou améliorer l'admission d'air. On connaît par ailleurs via la demande de brevet WO2015130384A2 une entrée d'air avec un ou plusieurs passages fluidiques de contrôle débouchant notamment à l'amont pour limiter le décollement du flux d'air admis en phase de poussée. Une grille peut être placée pour éviter l'ingestion de corps étrangers tout en permettant l'admission d'air en phase de poussée. De telles entrées d'air ne favorisent pas la phase d'inversion de poussée. Le document US4482114A divulgue un turboréacteur avec une entrée d'air pour le dégivrage pourvue de plusieurs passages fluidiques. Ce document mentionne également la possibilité d'implémenter une inversion de poussée.

### PRESENTATION DE L'INVENTION

L'invention concerne un turboréacteur d'aéronef selon la revendication 1.

L'invention est remarquable en ce que l'entrée d'air comprend au moins une conduite de circulation dans la cavité annulaire débouchant, d'une part, au niveau de la lèvre d'entrée d'air et, d'autre part, au niveau de la paroi intérieure et/ou de la paroi extérieure de manière à favoriser une phase d'inversion de poussée.

Grâce à l'invention, le flux d'air inverse est dévié au niveau de la lèvre d'entrée d'air et/ou la dépression locale au niveau de la lèvre d'entrée d'air est réduite ce qui permet d'empêcher le flux d'air de générer une force s'opposant à la poussée inverse, comme dans l'art antérieur.

Selon un aspect préféré, l'entrée d'air comprend une pluralité de conduites de circulation réparties à la circonférence de ladite entrée d'air autour de l'axe X. Selon un aspect, toutes les conduites peuvent être utilisées ensemble afin de permettre une phase d'inversion de poussée homogène sur la circonférence de l'entrée d'air, favorable à certaines conditions de fonctionnement, telles que lors du freinage. Selon un autre aspect, les conduites peuvent être ouvertes selon des degrés divers afin de permettre une phase d'inversion de poussée hétérogène, favorable à d'autres conditions de fonctionnement sur la circonférence de l'entrée d'air, afin de contrôler la recirculation du flux d'air inverse.

Selon un autre aspect préféré, l'entrée d'air comprend une unique conduite de circulation s'étendant de manière circonférentielle autour de l'axe X, afin d'optimiser la phase d'inversion de poussée sur l'ensemble de la circonférence de l'entrée d'air.

L'entrée d'air comprend au moins un organe de couverture monté mobile entre une position couverte, dans laquelle ledit organe de couverture ferme la conduite de circulation au niveau de la lèvre d'entrée d'air et une position découverte, dans laquelle ledit organe de couverture ouvre la conduite de circulation au niveau de la lèvre d'entrée d'air. Les performances du turboréacteur lors de la phase de poussée ne sont ainsi pas réduites.

De manière préférée, l'entrée d'air comprend au moins un organe de couverture amont monté mobile entre une position couverte, dans laquelle ledit organe de couverture amont ferme la conduite de circulation au niveau de la lèvre d'entrée d'air et une position découverte, dans laquelle ledit organe de couverture amont ouvre la conduite de circulation au niveau de la lèvre d'entrée d'air. Les performances du turboréacteur lors de la phase de poussée ne sont ainsi pas réduites.

De manière préférée, l'entrée d'air comprend au moins un organe de couverture aval monté mobile entre une position couverte, dans laquelle ledit organe de couverture aval ferme la conduite de circulation au niveau de la paroi intérieure ou de la paroi extérieure et une position découverte, dans laquelle ledit organe de couverture aval ouvre la conduite de circulation au niveau de la paroi intérieure ou de la paroi extérieure. Les performances du turboréacteur lors de la phase de poussée ne sont ainsi pas réduites.

Préférentiellement, l'entrée d'air comprend au moins un organe de déplacement commandable afin de déplacer au moins un organe de couverture (amont et/ou aval) de la position couverte à la position découverte.

Préférentiellement, l'organe de déplacement commandable permet de déplacer au moins un organe de couverture amont et/ou au moins un organe de couverture aval de la position découverte à la position couverte.

Préférentiellement, l'organe de couverture, amont et/ou aval, est configuré pour être déplacé de la position couverte à la position découverte sous l'action d'un flux d'air, ne nécessitant pas une alimentation en énergie supplémentaire à apporter par l'aéronef.

Préférentiellement, l'organe de couverture, amont et/ou aval, est configuré pour être déplacé de la position découverte à la position couverte sous l'action d'un flux d'air, ne nécessitant pas une alimentation en énergie supplémentaire à apporter par l'aéronef.

L'invention concerne en outre un procédé d'utilisation selon la revendication 7. La circulation d'un flux d'air intérieur permet avantageusement de créer un décollement au niveau de la lèvre d'entrée d'air qui évite toute dépression comme dans l'art antérieur. La circulation d'un flux d'air extérieur permet d'équilibrer la pression au niveau de la lèvre d'entrée d'air qui évite toute dépression comme dans l'art antérieur.

De préférence, l'organe de couverture est en position couverte lors d'une phase de poussée du turboréacteur, afin que l'entrée d'air possède un profil aérodynamique de manière à guider le flux d'air intérieur sur la paroi intérieure. Le procédé comporte, lors d'une phase d'inversion de poussée dudit turboréacteur, une étape de déplacement de l'organe de couverture en position découverte afin de favoriser la phase d'inversion de poussée.

De préférence, l'organe de couverture amont est en position couverte lors d'une phase de poussée du turboréacteur, afin que l'entrée d'air possède un profil aérodynamique de manière à guider le flux d'air intérieur sur la paroi intérieure. Le procédé comporte, lors d'une phase d'inversion de poussée dudit turboréacteur, une étape de déplacement de l'organe de couverture amont en position découverte afin de favoriser la phase d'inversion de poussée.

De préférence, l'organe de couverture aval est en position couverte lors d'une phase de poussée du turboréacteur, afin que l'entrée d'air possède un profil aérodynamique de manière à guider le flux d'air intérieur sur la paroi intérieure ou le flux d'air extérieur sur la paroi extérieure. Le procédé comporte, lors d'une phase d'inversion de poussée dudit turboréacteur, une étape de déplacement de l'organe de couverture aval en position découverte afin de favoriser la phase d'inversion de poussée.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 et
La figure 2 sont des représentations schématiques en coupe longitudinale d'une nacelle de turboréacteur selon l'art antérieur, en phase de poussée et en phase d'inversion de poussée respectivement,
La figure 3 est une représentation schématique en coupe longitudinale d'une nacelle de turboréacteur selon une première forme de réalisation de l'invention avec une conduite de circulation débouchant sur la paroi intérieure,
La figure 4 et
La figure 5 sont des représentations schématiques en coupe transversale d'une entrée d'air comprenant respectivement une ou deux rangées de conduites de circulation,
La figure 6 est une représentation schématique en coupe transversale d'une entrée d'air comprenant une conduite de circulation circonférentielle,
La figure 7A et
La figure 7B sont des représentations schématiques en coupe longitudinale d'une entrée d'air selon la première forme de réalisation comprenant des organes de déplacement commandable selon une position couverte et une position découverte respectivement,
La figure 7C,
La figure 7D et
La figure 7E sont des représentations schématiques en coupe longitudinale d'une entrée d'air selon la première forme de réalisation comprenant des organes de déplacement commandable selon plusieurs positions découvertes,
La figure 8 est une représentation schématique en coupe longitudinale d'une nacelle de turboréacteur, selon une deuxième forme de réalisation de l'invention avec plusieurs conduites de circulation débouchant sur la paroi extérieure,
La figure 9A et
La figure 9B sont des représentations schématiques en coupe longitudinale d'une entrée d'air selon la deuxième forme de réalisation comprenant des organes de déplacement commandable selon une position couverte et une position découverte respectivement,
La figure 10A et
La figure 10B sont des représentations schématiques en coupe longitudinale d'une entrée d'air selon une troisième forme de réalisation avec une conduite de circulation débouchant sur la paroi intérieure et sur la paroi extérieure,
La figure 11A est une représentation schématique en coupe longitudinale d'une nacelle de turboréacteur permettant une recirculation hétérogène du flux d'air inverse, selon l'invention, et
La figure 11B est une représentation schématique en coupe transversale d'une entrée d'air permettant une recirculation hétérogène du flux d'air inverse, selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

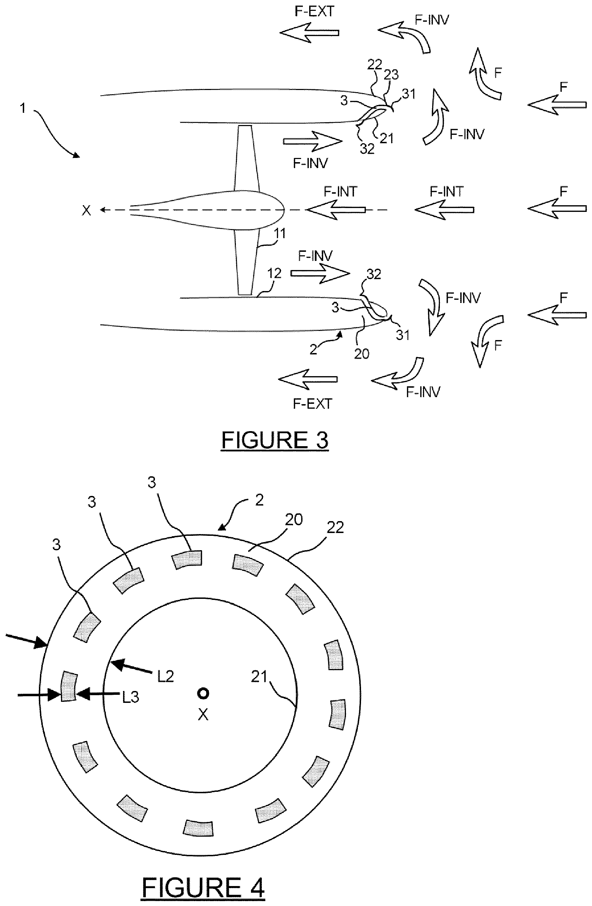

En référence à la figure 3, il est représenté un turboréacteur 1 selon l'invention s'étendant selon un axe X orienté de l'amont vers l'aval et comprenant une soufflante 11 montée rotative autour de l'axe X dans une virole extérieure 12 définissant une veine d'air. De manière connue, la soufflante 11 est configurée, lors d'une phase de poussée, pour accélérer un flux d'air circulant de l'amont vers l'aval dans le turboréacteur 1, dit flux d'air intérieur, et en phase d'inversion de poussée, pour accélérer un flux d'air circulant de l'aval vers l'amont dans le turboréacteur 1, dit flux d'air inverse F-INV.

En pratique, comme illustré sur la figure 3, le flux d'air inverse F-INV circule d'aval en amont dans une portion radialement extérieure de la veine d'air, en particulier, sur 1/3 du rayon de la veine d'air. Un flux d'air intérieur F-INT circule toujours d'amont en aval dans une portion radialement intérieure de la veine d'air, en particulier, sur 2/3 du rayon de la veine d'air. Le flux d'air intérieur F-INT assure un débit suffisant pour éviter tout phénomène de pompage du turboréacteur.

Comme illustré sur la figure 3, le turboréacteur 1 comprend une nacelle qui comprend à son extrémité amont une entrée d'air 2 s'étendant de manière circonférentielle autour de l'axe X et comprenant une paroi intérieure 21, tournée vers l'axe X et configurée pour guider le flux d'air intérieur F-INT et le flux d'air inverse F-INV, et une paroi extérieure 22, opposée à la paroi intérieure 21 et configurée pour guider un flux d'air extérieur F-EXT, circulant d'amont en aval. La paroi intérieure 21 et la paroi extérieure 22 sont reliées entre elles par une lèvre d'entrée d'air 23, comprenant un bord d'attaque. La paroi intérieure 21, la paroi extérieure 22 et la lèvre d'entrée d'air 23 forment une cavité annulaire 20 dans laquelle peut notamment être monté un dispositif d'atténuation acoustique ou un dispositif de dégivrage. La cavité annulaire 20 s'étend selon une direction longitudinale X20 parallèle à l'axe X.

Dans cet exemple, le turboréacteur 1 comporte des moyens d'inversion de poussée, en particulier, une soufflante 11 à pas variable, connue sous son abréviation anglaise « Variable Pitch Fan » ou VPF de manière à permettre d'inverser le flux d'air circulant dans le turboréacteur 1 et ainsi de créer une poussée inverse permettant la décélération de l'aéronef lors de l'atterrissage, ou lors de toutes autres manoeuvres.

Selon l'invention, l'entrée d'air 2 comprend au moins une conduite de circulation dans la cavité annulaire 20 débouchant, d'une part, au niveau de la lèvre d'entrée d'air 23 et, d'autre part, au niveau de la paroi intérieure 21 et/ou de la paroi extérieure 22 de manière à favoriser une phase d'inversion de poussée.

Par la suite, il va être présenté, selon une première forme de réalisation, une conduite débouchant dans la paroi intérieure 21 puis, selon une deuxième forme de réalisation, une conduite débouchant dans la paroi extérieure 22 et, selon une troisième forme de réalisation, une conduite débouchant dans la paroi intérieure 21 et dans la paroi extérieure 22.

Selon une première forme de réalisation de l'invention, en référence à la figure 3, l'entrée d'air 2 comprend plusieurs conduites de circulation 3 situées dans la cavité annulaire 20 et débouchant d'une part, au niveau de la lèvre d'entrée d'air 23, et d'autre part, au niveau de la paroi intérieure 21. Chaque conduite de circulation 3 est configurée pour laisser circuler un flux d'air de l'une à l'autre de ses deux extrémités.

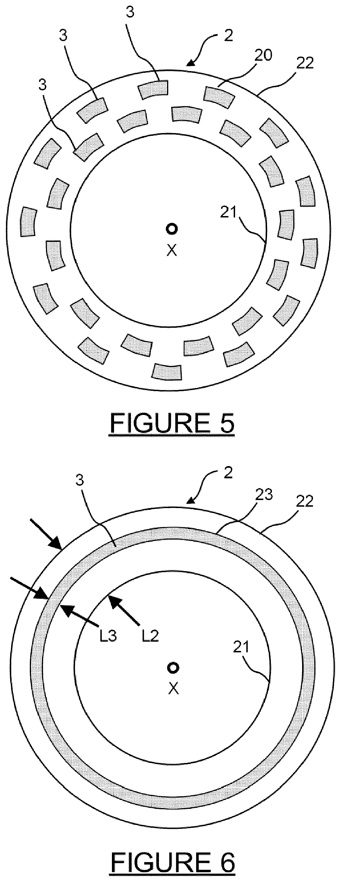

Comme illustré aux figures 4 et 5, les conduites de circulation 3 sont réparties à la circonférence de l'entrée d'air 2 autour de l'axe X, en une rangée d'axe X dans l'exemple de la figure 4 et deux rangées disposées en quinconce l'une par rapport à l'autre dans l'exemple de la figure 5. Il va de soi que les conduites de circulation 3 peuvent être réparties en un nombre de rangées différent. Dans ces exemples, les conduites de circulation 3 sont à la même distance radiale de l'axe X, autrement dit les rangées sont circulaires. Il va cependant de soi que les conduites de circulation 3 peuvent également être réparties de façon différente à la circonférence de l'entrée d'air 2, comme sur une partie de la circonférence de l'entrée d'air 2 uniquement ou de manière hétérogène, à titre d'exemples.

Dans l'exemple de la figure 6, l'entrée d'air 2 comprend une unique conduite de circulation 3 s'étendant sur la circonférence de l'entrée d'air 2 autour de l'axe X. Dans cet exemple, la conduite de circulation 3 s'étend de manière circulaire sur la circonférence de l'entrée d'air 2 selon un plan transversal. Chacune de ces configurations (Figures 4 à 6) permet avantageusement de laisser circuler une certaine quantité de flux d'air. La quantité de flux d'air dépend de l'épaisseur radiale d'une conduite de circulation L3, de préférence de l'ordre de 20% de l'épaisseur radiale de l'entrée d'air L2. Dans le cas des figures 4 et 5, celle-ci dépend également de la longueur azimutale et de la distance azimutale séparant deux conduites de circulation 3. A noter que ces deux paramètres peuvent varier d'une conduite de circulation à l'autre, dans l'optique de générer une poussée inverse hétérogène sur la circonférence de l'entrée d'air 2, avantageuse dans certaines conditions de fonctionnement, telles que lors du freinage. De manière préférée, une conduite de circulation 3 est de forme circulaire pour un meilleur guidage des flux au sein de la conduite de circulation 3. Il va cependant de soi que la conduite de circulation est de forme quelconque, telle que rectangulaire dans l'exemple des figures 4 et 5.

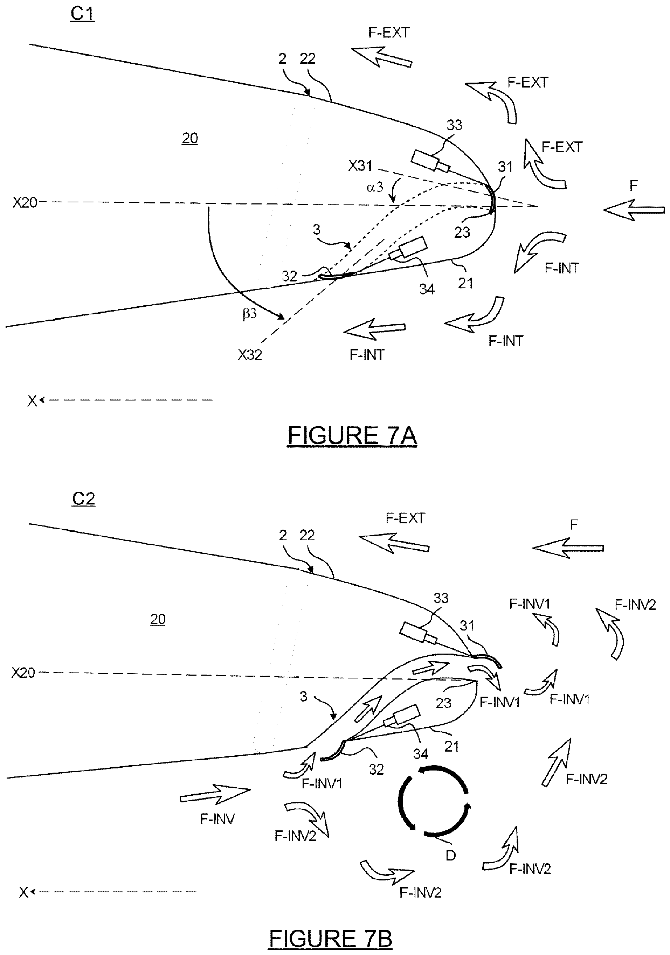

De manière préférée, comme illustré sur la figure 7A, la conduite de circulation 3 comporte une extrémité amont qui débouche au niveau de la lèvre d'entrée d'air 23 suivant une direction amont X31 d'angle amont α3 par rapport à la direction longitudinale X20, l'angle amont α3 étant compris de préférence entre -45° et 45°. De manière préférée, la conduite de circulation 3 comporte une extrémité aval qui débouche au niveau de la paroi inférieure 21 suivant une direction aval X32 d'angle aval β3 par rapport à la direction longitudinale X20, l'angle aval β3 étant compris de préférence entre 0° et 60°.

Comme cela sera présenté par la suite, cela permet avantageusement de créer une circulation du flux d'air inverse lors de la phase d'inversion de poussée de manière à limiter l'apparition d'une dépression comme dans l'art antérieur au niveau de la lèvre d'entrée d'air 23.

Dans cet exemple, en référence aux figures 7A et 7B, l'entrée d'air 2 comprend en outre un organe de couverture amont 31 et un organe de couverture aval 32, montés mobiles au niveau de l'extrémité amont et de l'extrémité aval de la conduite de circulation 3 respectivement. Il va de soi que dans le cas d'une pluralité de conduites de circulation 3, l'entrée d'air 2 comprend une pluralité d'organes de couverture amont 31 et aval 32. De même, il va de soi qu'une conduite de circulation 3 ne pourrait comprendre qu'un organe de couverture amont 31, qu'un organe de couverture aval 32 ou aucun des deux.

De manière préférée, les organes de couverture 31, 32 sont montés mobiles en rotation (Figures 7A et 7B) mais il va de soi que ces organes de couverture 31, 32 peuvent être montés mobiles suivant un mouvement quelconque, tel qu'un mouvement de translation à titre d'exemple. De préférence, l'organe de couverture amont 31 est monté sur le bord radialement extérieur de l'extrémité amont de la conduite de circulation 3, tel que représenté sur les figures 7A et 7B. Il va cependant de soi que l'organe de couverture amont 31 peut être monté sur le bord radialement intérieur de l'extrémité amont. De même, préférentiellement, l'organe de couverture aval 32 est monté sur le bord amont de l'extrémité aval de la conduite de circulation 3, tel que représenté sur les figures 7A et 7B. Il va cependant de soi que l'organe de couverture aval 32 peut être monté sur le bord aval de l'extrémité aval.

Selon un aspect de l'invention et en référence aux figures 7A et 7B, l'organe de couverture amont 31 est monté mobile entre :
- une position couverte C1 (Figure 7A) dans laquelle l'organe de couverture amont 31 ferme la conduite de circulation 3 au niveau de la lèvre d'entrée d'air 23, afin de favoriser la phase de poussée et
- une position découverte C2 (Figure 7B) dans laquelle l'organe de couverture amont 31 ouvre la conduite de circulation 3 au niveau de la lèvre d'entrée d'air 23, afin de favoriser la phase d'inversion de poussée.

De manière analogue, l'organe de couverture aval 32 est monté mobile entre :
- une position couverte C1 dans laquelle l'organe de couverture aval 32 ferme la conduite de circulation 3 au niveau de la paroi intérieure 21, afin de favoriser la phase de poussée et
- une position découverte C2 dans laquelle l'organe de couverture aval 32 ouvre la conduite de circulation 3 au niveau de la paroi intérieure 21, afin de favoriser la phase d'inversion de poussée.

De manière préférée, les organes de couverture amont 31 et aval 32 adoptent la même position couverte ou découverte afin de favoriser la phase de poussée et la phase d'inversion de poussée. Ainsi, l'entrée d'air 2 permet de remplir deux rôles différents lors de la phase de poussée et lors de la phase d'inversion de poussée. Comme illustré sur la figure 7A, dans la position couverte C1, les organes de couverture amont 31 et aval 32 recouvrent les deux extrémités de la conduite de circulation 3, ce qui permet de ne pas affecter les performances aérodynamiques de l'entrée d'air 2 qui possède un profil aérodynamique. Autrement dit, le flux d'air amont F se sépare au niveau de la lèvre d'entrée d'air 23 en un flux d'air intérieur F-INT et un flux d'air extérieur F-EXT de façon similaire à l'art antérieur. La phase de poussée est ainsi optimale.

Comme illustré sur la figure 7B, dans la position découverte C2, les organes de couverture amont 31 et aval 32 laissent circuler une partie du flux d'air inverse F-INV, notée flux d'air inverse auxiliaire F-INV1, dans la conduite de circulation 3 et génèrent un décollement de l'autre partie du flux d'air inverse F-INV, notée flux d'air inverse principal F-INV2. Autrement dit, le flux d'air inverse F-INV est dévié de sa trajectoire longeant la lèvre d'entrée d'air 23, à l'origine de la réduction de la phase d'inversion de poussée. La phase d'inversion de poussée est ainsi améliorée.

Préférentiellement, les organes de couverture amont 31 et aval 32 se présentent sous la forme d'un clapet de faible épaisseur afin de générer un encombrement minimal. Préférentiellement, les organes de couverture amont 31 et aval 32 ont un profil légèrement incurvé de manière à présenter un profil aérodynamique semblable à celui de la lèvre d'entrée d'air 23 et de la paroi intérieure 21 respectivement. Préférentiellement, le matériau des organes de couverture amont 31 et aval 32 est identique à celui de la lèvre d'entrée d'air 23 et de la paroi intérieure 21, à savoir résistant aux forces aérodynamiques en jeu.

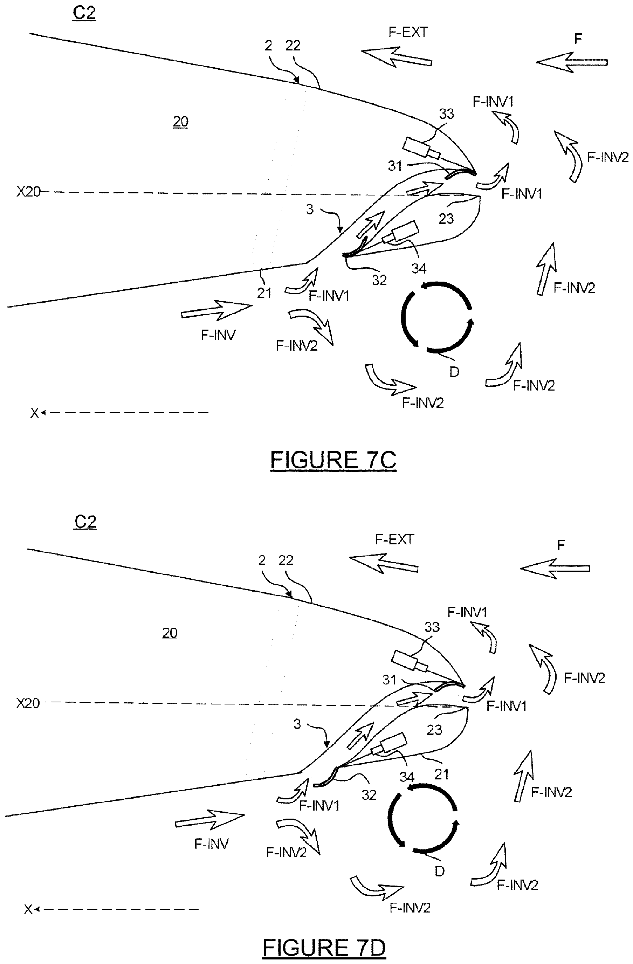

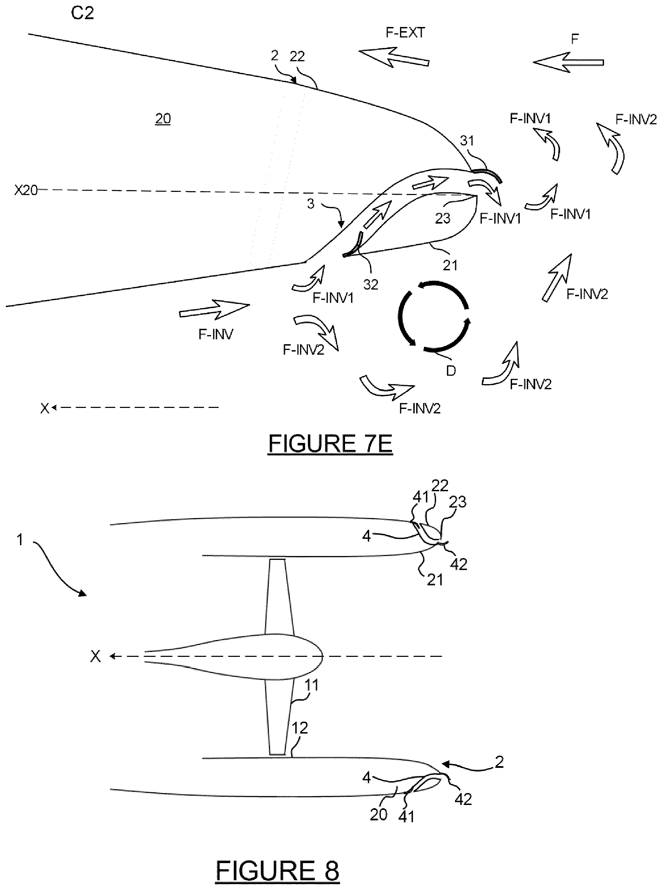

Selon un aspect préféré de l'invention et comme illustré sur la figure 7B, en position découverte C2, les organes de couverture amont 31 et aval 32 s'étendent de manière extérieure à la conduite de circulation 3 afin de guider le flux d'air inverse auxiliaire F-INV1 vers la conduite de circulation 3 et en dehors de celle-ci respectivement. Selon un autre aspect de l'invention et comme illustré sur la figure 7C, en position découverte C2, les organes de couverture amont 31 et aval 32 s'étendent de manière intérieure à la conduite de circulation 3 afin de générer un encombrement minimal et pas dégrader l'aérodynamisme. Selon un autre aspect de l'invention et comme illustré sur les figures 7D et 7E, en position découverte C2, une partie des organes de couverture 31, 32 s'étend de manière intérieure tandis que l'autre partie s'étend de manière extérieure.

Selon un aspect de l'invention, en référence aux figures 7A, 7B, 7C et 7D, l'entrée d'air 2 comprend deux organes de déplacement commandables 33, 34 permettant de déplacer de la position couverte C1 à la position découverte C2 l'organe de couverture amont 31 et aval 32 respectivement. Préférentiellement, les organes de déplacement commandables 33, 34 permettent également de déplacer les organes de couverture 31, 32 de la position découverte C2 à la position couverte C1. Il va de soi qu'un même organe de déplacement commandable 33, 34 peut déplacer plusieurs organes de couverture 31, 32. Il va également de soi que le nombre d'organes de déplacement commandables 33, 34 est quelconque. A titre d'exemple, les organes de déplacement commandables 33, 34 se présentent sous la forme d'un actionneur pneumatique, hydraulique, électrique ou autre afin de permettre un déplacement suite à la réception d'une instruction de commande d'un calculateur.

Selon un autre aspect de l'invention, en référence à la figure 7E, les organes de couverture amont 31 et aval 32 sont configurés pour être déplacés au moyen des forces aérodynamiques en jeu. Plus précisément, les organes de couverture 31, 32 sont configurés pour être déplacés de la position couverte C1 à la position découverte C2 par le flux d'air inverse auxiliaire F-INV1. Préférentiellement, les organes de couverture 31, 32 sont configurés pour être déplacés de la position découverte C2 à la position couverte C1 par le flux d'air amont F. Cet aspect de l'invention présente l'avantage d'utiliser judicieusement l'énergie cinétique de l'air, ne nécessitant pas d'apport d'énergie supplémentaire. Il va de soi qu'une partie des organes de couverture 31, 32 peut être déplacée au moyen des organes de déplacement commandables 33, 34 et l'autre partie au moyen des forces aérodynamiques en jeu.

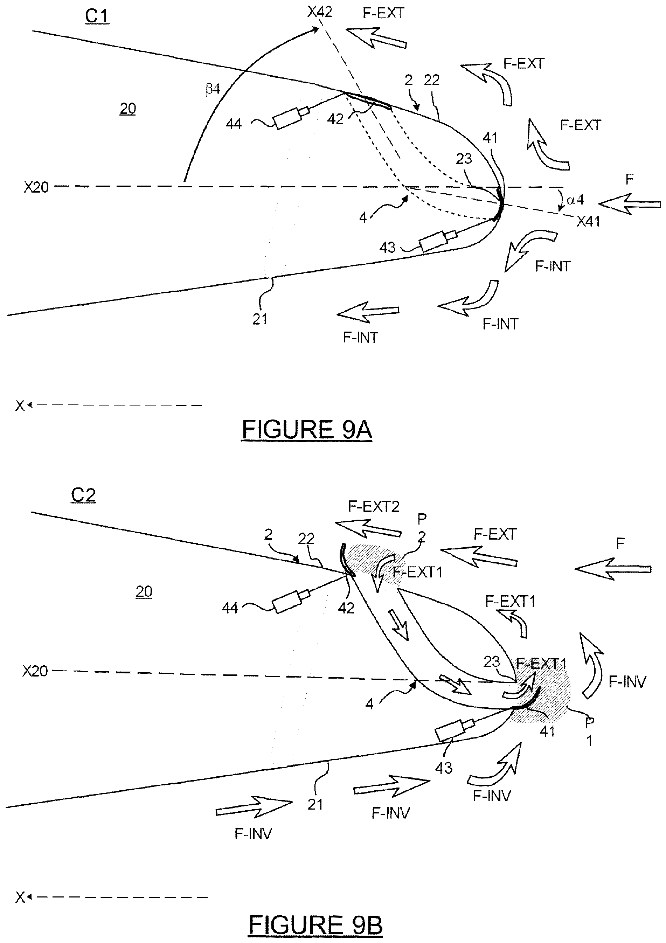

Selon une deuxième forme de réalisation de l'invention, en référence à la figure 8, il est représenté une conduite de circulation 4 débouchant d'une part, au niveau de la lèvre d'entrée d'air 23, et d'autre part, au niveau de la paroi extérieure 22. Comme illustré sur la figure 9A, l'extrémité amont de la conduite de circulation 4 est orientée suivant la direction amont X41 formant un angle amont α4 avec la direction longitudinale X20, l'angle α4 étant compris de préférence entre -60° et +60°. De la même façon, l'extrémité aval de la conduite de circulation 4 est orientée suivant la direction aval X42 formant un angle aval β4 avec la direction longitudinale X20, l'angle β4 étant compris de préférence entre 45° et 170°.

Par souci de clarté et de concision, la description des éléments de la première forme de réalisation n'est pas reprise pour la deuxième forme de réalisation, seules les différences fonctionnelles et structurelles sont présentées.

Selon un aspect de l'invention, comme illustré sur les figures 9A et 9B, l'organe de couverture amont 41 est monté mobile de manière similaire à la première forme de réalisation. L'organe de couverture aval 42, quant à lui, est monté mobile entre :
- la position couverte C1 (Figure 9A) dans laquelle l'organe de couverture aval 42 ferme la conduite de circulation 3 au niveau de la paroi extérieure 22, afin de favoriser la phase de poussée et
- la position découverte C2 (Figure 9B) dans laquelle l'organe de couverture aval 42 ouvre la conduite de circulation 3 au niveau de la paroi extérieure 22, afin de favoriser la phase d'inversion de poussée.

De manière préférée, selon cette deuxième forme de réalisation, l'organe de couverture amont 41 est préférentiellement monté sur le bord radialement intérieur de l'extrémité amont de la conduite de circulation 4, tel que représenté sur les figures 9A et 9B. Il va cependant de soi que l'organe de couverture amont 41 peut être monté sur le bord radialement extérieur de l'extrémité amont. De même, préférentiellement, l'organe de couverture aval 42 est monté sur le bord aval de l'extrémité aval de la conduite de circulation 4, tel que représenté sur les figures 9A et 9B. Il va cependant de soi que l'organe de couverture aval 42 peut être monté sur le bord amont de l'extrémité aval.

Selon un aspect préféré de l'invention et comme illustré sur la figure 9B, en position découverte C2, les organes de couverture amont 41 et aval 42 s'étendent de manière extérieure à la conduite de circulation 4 afin de guider le flux d'air extérieur auxiliaire F-EXT1 vers la conduite de circulation 3 et en dehors de celle-ci respectivement. Il va cependant de soi qu'au moins une partie des organes de couverture 41, 42 peut s'étendre de manière intérieure à la conduite de circulation 4.

Ainsi, comme illustré sur la figure 9B, dans la position découverte C2, les organes de couverture amont 41 et aval 42 laissent circuler une partie du flux d'air extérieur F-EXT, notée flux d'air extérieur auxiliaire F-EXT1, au sein de la conduite de circulation 4, l'autre partie du flux d'air extérieur F-EXT, notée flux d'air extérieur principal F-EXT2, longeant la paroi extérieure 22. La circulation du flux d'air extérieur auxiliaire F-EXT1 au sein de la conduite de circulation 4 permet d'équilibrer la pression aval P2, au niveau de la paroi extérieure 22, avec la pression amont P1, au niveau de la lèvre d'entrée d'air 23. Autrement dit, la pression amont P1, faible dans l'art antérieur (présence d'une dépression locale P) est égalisée à la pression aval P2 par aspiration du flux d'air extérieur auxiliaire F-EXT1. La phase d'inversion de poussée est ainsi améliorée.

Dans l'exemple des figures 9A et 9B, les organes de couverture 41, 42 sont déplacés par les organes de déplacement commandables 43, 44 mais il va soi de que le déplacement pourrait être réalisé différemment, tel que décrit dans le premier mode de réalisation.

Grâce à l'invention, quelle que soit la forme de réalisation, la pression amont P1 au niveau de la lèvre d'entrée d'air 23 est augmentée et/ou le flux d'air en sortie d'entrée d'air 2 est décollé de la paroi intérieure 21, ce qui permet judicieusement d'augmenter les performances de l'aéronef en phase d'inversion de poussée. Par ailleurs, l'invention ne réduit pas les performances de l'aéronef en phase de poussée grâce aux organes de couverture 31, 32, 41, 42 qui sont montés mobiles. En outre, cette invention présente une masse et un encombrement réduits, et est peu énergivore, en particulier dans le cas où les organes de couverture 31, 32, 41, 42 sont déplacés au moyen des forces aérodynamiques en jeu.

De manière analogue à précédemment, les conduites de circulation 4 selon la deuxième forme de réalisation sont réparties à la circonférence de l'entrée d'air 2 autour de l'axe X, en une rangée radiale d'axe X ou deux rangées radiales en quinconce. Il va de soi que les conduites de circulation 4 peuvent être réparties en un nombre de rangées différent. Les conduites de circulation 4 peuvent également être réparties de façon différente à la circonférence de l'entrée d'air 2, comme sur une partie de la circonférence de l'entrée d'air 2 à titre d'exemple. De manière alternative, l'entrée d'air 2 comprend une unique conduite de circulation 4 s'étendant sur la circonférence de l'entrée d'air 2 autour de l'axe X.

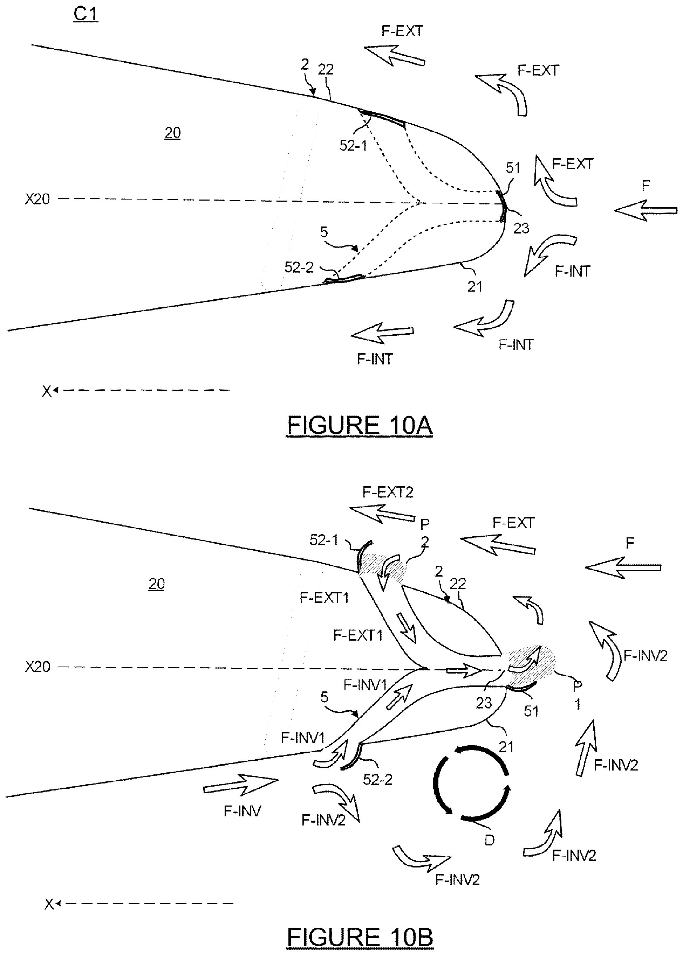

Selon une troisième forme de réalisation de l'invention, en référence aux figures 10A et 10B, il est représenté une conduite de circulation 5 débouchant d'une part, au niveau de la lèvre d'entrée d'air 23, et d'autre part, au niveau de la paroi intérieure 21 et de la paroi extérieure 22. Dans cette troisième forme de réalisation, la conduite de circulation 5 comprend un premier tronçon de conduite, analogue à la conduite de circulation 3, configuré pour faire circuler le flux d'air inverse auxiliaire F-INV1 de la paroi intérieure 21 et un deuxième tronçon de conduite, analogue à la conduite de circulation 4, configuré pour faire circuler le flux d'air extérieur auxiliaire F-EXT1, qui débouchent tous deux sur un tronçon commun de conduite permettant de faire circuler le flux d'air inverse auxiliaire F-INV1 et le flux d'air extérieur auxiliaire F-EXT1 jusqu'à la lèvre d'entrée d'air 23.

De manière préférée, comme illustré sur les figures 10A et 10B, la conduite de circulation 5 comprend un organe de couverture amont 51 et un premier organe de couverture aval 52-1 montés mobiles de manière similaire à la deuxième forme de réalisation. La conduite de circulation 5 comprend en outre un deuxième organe de couverture aval 52-2 monté mobile de manière similaire à la première forme de réalisation.

De manière avantageuse, comme illustré sur la figure 10B, dans la position découverte C2, l'organe de couverture amont 51 et le premier organe de couverture aval 52-1 laissent circuler le flux d'air extérieur auxiliaire F-EXT1, ce qui permet d'équilibrer la pression aval P2 avec la pression amont P1, au niveau de la lèvre d'entrée d'air 23. De manière complémentaire, l'organe de couverture amont 51 et le deuxième organe de couverture aval 52-2 laissent circuler le flux d'air inverse auxiliaire F-INV1, ce qui permet de décoller le flux d'air inverse F-INV2. La phase d'inversion de poussée est ainsi optimisée en combinant les avantages de la première forme de réalisation et de la deuxième forme de réalisation.

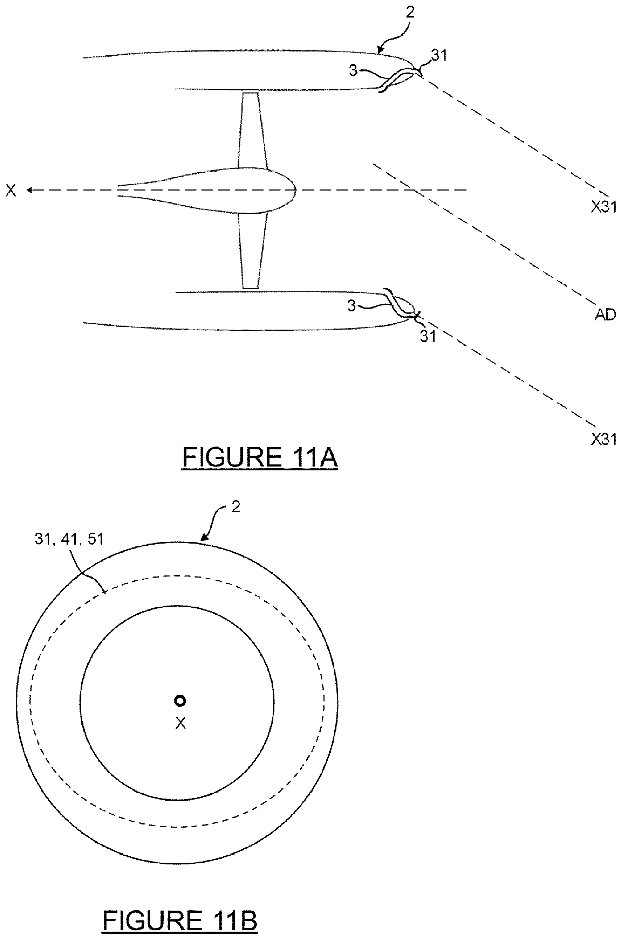

En particulier, les trois formes de réalisation décrites présentent une conduite de circulation 3, 4, 5 permettant de dévier le flux d'air inverse F-INV de manière homogène le long de la circonférence de l'entrée d'air 2. Toutefois, dans certaines conditions de fonctionnement, il peut être intéressant de dévier ce flux d'air inverse F-INV de manière hétérogène. On décrit ainsi par la suite, en référence aux figures 11A et 11B deux exemples permettant de dévier le flux d'air inverse F-INV de manière hétérogène.

Comme illustré sur la figure 11A, une extrémité amont 31, 41, 51 peut être orientée selon des directions différentes à la circonférence de l'entrée d'air 2 de manière à former une lèvre d'entrée d'air orientée selon un axe AD prédéterminé. Il en va de même pour l'extrémité aval 32, 42, 52-1, 52-2. De manière alternative, en référence à la figure 11B, les conduites de circulation 3, 4, 5 peuvent former une rangée de forme elliptique, en particulier ovoïde, sur la circonférence de l'entrée d'air 2, dans un plan transversal à l'axe X. Dans le cas d'une unique conduite de circulation 3, 4, 5, celle-ci peut prendre une forme elliptique dans un plan transversal à l'axe X. Une déviation hétérogène permet avantageusement de guider le flux d'air inverse en tenant compte de l'environnement de l'entrée d'air 2.

On décrit par la suite un procédé d'utilisation de l'entrée d'air 2 selon l'invention précédemment présentée. Par souci de clarté, il est présenté le déplacement d'un unique organe de couverture 31, 32, 41, 42, 51, 52-1, 52-2 mais il va de soi qu'une pluralité d'organes de couverture amont 31, 41, 51 et/ou aval 32, 42, 52-1, 52-2 peuvent être déplacées de manière concomitante ou séquentielle.

Lors de la phase de poussée, la soufflante 11 permet d'accélérer un flux d'air intérieur F-INT de l'amont vers l'aval qui est guidé par l'entrée d'air 2 ayant un profil aérodynamique favorisant la phase de poussée. Chaque organe de couverture 31, 32, 41, 42, 51, 52-1, 52-2 est dans la position couverte C1 lors de la phase de poussée du turboréacteur 1, afin que l'entrée d'air 2 possède un profil aérodynamique de manière à guider le flux d'air.

Lors d'une phase d'inversion de poussée dudit turboréacteur 1, en particulier suite à une modification du pas des aubes de soufflante 11, l'organe de couverture 31, 32, 41, 42, 51, 52-1, 52-2 est déplacé dans la position découverte C2, ouvrant la conduite de circulation 3 afin de faire circuler un flux d'air équilibrant les pressions amont P1 et aval P2 et/ou générant un décollement D du flux d'air inverse F-INV de la paroi intérieure 21, pour favoriser la phase d'inversion de poussée.

Selon un aspect de l'invention, l'étape de déplacement est réalisée au moyen de l'organe de déplacement commandable 33, 34, 43, 44, de façon simple et efficace. Selon un autre aspect de l'invention, ce sont les forces aérodynamiques en jeu qui déplacent les organes de couverture 31, 32, 41, 42, 51, 52-1, 52-2 ce qui présente l'avantage d'être moins énergivore.

De manière avantageuse, un tel procédé d'utilisation procure à l'aéronef de bonnes performances à la fois en phase de poussée, où le flux d'air intérieur F-INT est guidé par la paroi intérieure 21 vers la soufflante 11, et en phase d'inversion de poussée, où le flux d'air inverse F-INV est dévié de sa trajectoire longeant la paroi intérieure 21 et à l'origine d'une dépression locale.

Selon un aspect de l'invention, dans le cas d'une pluralité de conduites de circulation 3, 4, 5, seule une partie des conduites de circulation 3, 4, 5 est ouverte par les organes de couverture 31, 32, 41, 42, 51, 52-1, 52-2 afin de générer une phase d'inversion de poussée qui soit hétérogène sur la circonférence de l'entrée d'air 2, ce qui est avantageux pour certaines conditions de fonctionnement, telles que le freinage.

Selon un aspect de l'invention, une conduite de circulation 3, 4, 5 comprend plusieurs niveaux de position couverte C1, définis par la valeur de l'angle amont α3, α4 et/ou de l'angle aval β3, β4. Dans le cas d'une pluralité de conduites de circulation 3, 4, 5, les organes de couverture 31, 32, 41, 42, 51, 52-1, 52-2 peuvent ainsi avantageusement être utilisées suivant des niveaux de position couverte C1 différents les uns par rapport aux autres. Une phase d'inversion de poussée hétérogène sur la circonférence de l'entrée d'air peut ainsi être générée, ce qui est avantageux pour certaines conditions de fonctionnement, telles que lors du freinage.

## Revendications

1. Turboréacteur (1) d'aéronef s'étendant selon un axe X orienté de l'amont vers l'aval dans lequel circule un flux d'air intérieur (F-INT) de l'amont vers l'aval lors d'une phase de poussée et un flux d'air inverse (F-INV) de l'aval vers l'amont lors d'une phase d'inversion de poussée, ledit turboréacteur (1) comportant une soufflante (11) configurée de manière à fournir une poussée inverse et une nacelle comportant une entrée d'air (2) s'étendant de manière circonférentielle autour de l'axe X et comprenant une paroi intérieure (21) tournée vers l'axe X et configurée pour guider le flux d'air intérieur (F-INT) et le flux d'air inverse (F-INV) et une paroi extérieure (22), opposée à la paroi intérieure (21) et configurée pour guider un flux d'air extérieur (F-EXT), la paroi intérieure (21) et la paroi extérieure (22) étant reliées entre elles par une lèvre d'entrée d'air (23) de manière à former une cavité annulaire (20), ladite entrée d'air (2) comprenant au moins une conduite de circulation (3, 4, 5) dans la cavité annulaire (20) débouchant, d'une part, au niveau de la lèvre d'entrée d'air (23) et, d'autre part, au niveau de la paroi intérieure (21) et/ou de la paroi extérieure (22) de manière à favoriser une phase d'inversion de poussée, ladite entrée d'air (2) comprenant au moins un organe de couverture (31, 41, 51, 32, 42, 52-1, 52-2) monté mobile entre une position couverte (C1), dans laquelle ledit organe de couverture (31, 41, 51, 32, 42, 52-1, 52-2) ferme la conduite de circulation (3, 4, 5) au niveau de la lèvre d'entrée d'air (23) et une position découverte (C2), dans laquelle ledit organe de couverture (31, 41, 51, 32, 42, 52-1, 52-2) ouvre la conduite de circulation (3, 4, 5) au niveau de la lèvre d'entrée d'air (23).

2. Turboréacteur (1) selon la revendication 1, comprenant une pluralité de conduites de circulation (3, 4, 5) réparties à la circonférence de ladite entrée d'air (2) autour de l'axe X.

3. Turboréacteur (1) selon la revendication 1, comprenant une unique conduite de circulation (3, 4, 5) s'étendant de manière circonférentielle autour de l'axe X.

4. Turboréacteur (1) selon l'une des revendications 1 à 3, comprenant au moins un organe de couverture amont (31, 41, 51) monté mobile entre une position couverte (C1), dans laquelle ledit organe de couverture amont (31, 41, 51) ferme la conduite de circulation (3, 4, 5) au niveau de la lèvre d'entrée d'air (23) et une position découverte (C2), dans laquelle ledit organe de couverture amont (31, 41, 51) ouvre la conduite de circulation (3, 4, 5) au niveau de la lèvre d'entrée d'air (23).

5. Turboréacteur (1) selon l'une des revendications 1 à 4, comprenant au moins un organe de couverture aval (32, 42, 52-1, 52-2) monté mobile entre une position couverte (C1), dans laquelle ledit organe de couverture aval (32, 42, 52-1, 52-2) ferme la conduite de circulation (3, 4, 5) au niveau de la paroi intérieure (21) ou de la paroi extérieure (22) et une position découverte (C2), dans laquelle ledit organe de couverture aval (32, 42, 52-1, 52-2) ouvre la conduite de circulation (3, 4 ,5) au niveau de la paroi intérieure (21) ou de la paroi extérieure (22).

6. Turboréacteur (1) selon l'une des revendications 1 à 5, comprenant au moins un organe de déplacement commandable (33, 34, 43, 44) afin de déplacer au moins un organe de couverture (31, 41, 32, 42, 51, 52-1, 52-2) de la position couverte (C1) à la position découverte (C2).

7. Procédé d'utilisation d'un turboréacteur selon l'une des revendications 1 à 6, comprenant, lors d'une phase d'inversion de poussée dudit turboréacteur (1), une étape de circulation d'un flux d'air dans la conduite de circulation (3, 4, 5) de la paroi intérieure (21) et/ou de la paroi extérieure (22) vers la lèvre d'entrée d'air (23) afin de favoriser la phase d'inversion de poussée.

8. Procédé d'utilisation d'un turboréacteur selon la revendication 7, dans lequel l'organe de couverture (31, 41, 51, 32, 42, 52-1, 52-2) est en position couverte (C1) lors d'une phase de poussée du turboréacteur (1), afin que l'entrée d'air (2) possède un profil aérodynamique de manière à guider le flux d'air intérieur (F-INT) sur la paroi intérieure (21), le procédé comportant, lors d'une phase d'inversion de poussée dudit turboréacteur (1), une étape de déplacement de l'organe de couverture (31, 41, 51, 32, 42, 52-1, 52-2) en position découverte (C2) afin de favoriser la phase d'inversion de poussée.

## Patentansprüche

1. Turbotriebwerk (1) eines Flugzeugs, das sich gemäß einer Achse X ausgerichtet von stromaufwärts nach stromabwärts erstreckt, in dem ein innerer Luftstrom (F-INT) während einer Schubphase von stromaufwärts nach stromabwärts und während einer Schubumkehrphase ein umgekehrter Luftstrom (F-INV) von stromabwärts nach stromaufwärts zirkuliert, wobei das Turbotriebwerk (1) einen Bläser (11) aufweist, der derart ausgelegt ist, dass ein umgekehrter Schub bereitgestellt wird und eine Gondel, die einen Lufteintritt (2) aufweist, der sich umfangmäßig um die Achse X erstreckt und eine Innenwand (21) umfasst, die zur Achse X zeigt und dazu ausgelegt ist, den inneren Luftstrom (F-INT) und den umgekehrten Luftstrom (F-INV) zu führen und eine Außenwand (22) gegenüber der Innenwand (21) und dazu ausgelegt, einen äußeren Luftstrom (F-EXT) zu führen, wobei die Innenwand (21) und die Außenwand (22) durch eine Lufteintrittslippe (23) derart miteinander verbunden sind, dass ein ringförmiger Hohlraum (20) gebildet wird, wobei der Lufteintritt (2) mindestens eine Zirkulationsleitung (3, 4, 5) im ringförmigen Hohlraum (20) umfasst, die zum einen im Bereich der Lufteintrittslippe (23) und zum anderen im Bereich der Innenwand (21) und/oder der Außenwand (22) ausmündet, so dass eine Schubumkehrphase gefördert wird, wobei der Lufteintritt (2) mindestens ein Abdeckorgan (31, 41, 51, 32, 42, 52-1, 52-2) umfasst, das zwischen einer Abdeckposition (C1), in welcher das Abdeckorgan (31, 41, 51, 32, 42, 52-1, 52-2) die Zirkulationsleitung (3, 4, 5) im Bereich der Lufteintrittslippe (23) verschließt, und einer Aufdeckposition (C2), in welcher das Abdeckorgan (31, 41, 51, 32, 42, 52-1, 52-2) die Zirkulationsleitung (3, 4, 5) im Bereich der Lufteintrittslippe (23) öffnet, beweglich angebracht ist.

2. Turbotriebwerk (1) nach Anspruch 1, umfassend eine Vielzahl von Zirkulationsleitungen (3, 4, 5), die auf dem Umfang des Lufteintritts (2) um die Achse X verteilt sind.

3. Turbotriebwerk (1) nach Anspruch 1, umfassend eine einzige Zirkulationsleitung (3, 4, 5), die sich umfangmäßig um die Achse X erstreckt.

4. Turbotriebwerk (1) nach einem der Ansprüche 1 bis 3, umfassend mindestens ein stromaufwärtiges Abdeckorgan (31, 41, 51), das zwischen einer Abdeckposition (C1), in welcher das stromaufwärtige Abdeckorgan (31, 41, 51) die Zirkulationsleitung (3, 4, 5) im Bereich der Lufteintrittslippe (23) verschließt, und einer Aufdeckposition (C2), in welcher das stromabwärtige Abdeckorgan (31, 41, 51) die Zirkulationsleitung (3, 4, 5) im Bereich der Lufteintrittslippe (23) öffnet, beweglich angebracht ist.

5. Turbotriebwerk (1) nach einem der Ansprüche 1 bis 4, umfassend mindestens ein stromabwärtiges Abdeckorgan (32, 42, 52-1, 52-2), das zwischen einer Abdeckposition (C1), in welcher das stromabwärtige Abdeckorgan (32, 42, 52-1, 52-2) die Zirkulationsleitung (3, 4, 5) im Bereich der Innenwand (21) oder der Außenwand (22) verschließt, und einer Aufdeckposition (C2), in welcher das stromabwärtige Abdeckorgan (32, 42, 52-1, 52-2) die Zirkulationsleitung (3, 4 ,5) im Bereich der Innenwand (21) oder der Außenwand (22) öffnet, beweglich angebracht ist.

6. Turbotriebwerk (1) nach einem der Ansprüche 1 bis 5, umfassend mindestens ein steuerbares Verlagerungsorgan (33, 34, 43, 44), um mindestens ein Abdeckorgan (31, 41, 32, 42, 51, 52-1, 52-2) aus der Abdeckposition (C1) in die Aufdeckposition (C2) zu verlagern.

7. Verfahren zur Verwendung eines Turbotriebwerks nach einem der Ansprüche 1 bis 6, umfassend, bei einer Schubumkehrphase des Turbotriebwerks (1), einen Zirkulationsschritt eines Luftstroms in der Zirkulationsleitung (3, 4, 5) von der Innenwand (21) und/oder der Außenwand (22) zur Lufteintrittslippe (23), um die Schubumkehrphase zu fördern.

8. Verfahren zur Verwendung eines Turbotriebwerks nach Anspruch 7, wobei das Abdeckorgan (31, 41, 51, 32, 42, 52-1, 52-2) bei einer Schubphase des Turbotriebwerks (1) in Abdeckposition (C1) ist, damit der Lufteintritt (2) ein aerodynamisches Profil besitzt, um den inneren Luftstrom (F-INT) über die Innenwand (21) zu führen, wobei das Verfahren bei einer Schubumkehrphase des Turbotriebwerks (1) einen Verlagerungsschritt des Abdeckorgans (31, 41, 51, 32, 42, 52-1, 52-2) in Aufdeckposition (C2) aufweist, um die Schubumkehrphase zu fördern.

## Claims

1. Aircraft turbojet (1) extending along an axis X oriented from upstream to downstream wherein an internal air flow (F-INT) circulates from upstream to downstream during a thrust phase and a reverse air flow (F-INV) from downstream to upstream during a reverse thrust phase, said turbojet (1) comprising a fan (11) configured to provide a reverse thrust and a nacelle comprising an air intake (2) extending circumferentially around the axis X and comprising an inner wall (21) oriented toward the axis X and configured to guide the internal air flow (F-INT) and the reverse air flow (F-INV) and an outer wall (22), opposite the inner wall (21) and configured to guide an external air flow (F-EXT), the inner wall (21) and the outer wall (22) being connected together by an air intake lip (23) so as to form an annular cavity (20), said air intake (2) comprising at least one circulation duct (3, 4, 5) in the annular cavity (20) opening, on the one hand, at the air intake lip (23) and, on the other hand, at the inner wall (21) and/or the outer wall (22) so as to promote a reverse thrust phase, said air intake (2) comprising at least one cover member (31, 41, 51, 32, 42, 52-1, 52-2) movably mounted between a covered position (C1), wherein said cover member (31, 41, 51, 32, 42, 52-1, 52-2) closes the circulation duct (3, 4, 5) at the air intake lip (23) and an uncovered position (C2), wherein said cover member (31, 41, 51, 32, 42, 52-1, 52- 2) opens the circulation duct (3, 4, 5) at the air intake lip (23).

2. Turbojet (1) according to claim 1, comprising a plurality of circulation ducts (3, 4, 5) distributed at the circumference of said air intake (2) around the axis X.

3. Turbojet (1) according to claim 1, comprising a single circulation duct (3, 4, 5) extending circumferentially around the axis X.

4. Turbojet (1) according to one of claims 1 to 3, comprising at least one upstream cover member (31, 41, 51) movably mounted between a covered position (C1), wherein said upstream cover member (31, 41, 51) closes the circulation duct (3, 4, 5) at the air intake lip (23) and an uncovered position (C2), wherein said upstream cover member (31, 41, 51) opens the circulation duct (3, 4, 5) at the air intake lip (23).

5. Turbojet (1) according to one of claims 1 to 4, comprising at least one downstream cover member (32, 42, 52-1, 52-2) movably mounted between a covered position (C1), wherein said downstream cover member (32, 42, 52-1, 52-2) closes the circulation line (3, 4, 5) at the inner wall (21) or the outer wall (22) and an uncovered position (C2), wherein said downstream cover member (32, 42, 52-1, 52-2) opens the circulation duct (3, 4, 5) on inner wall (21) or outer wall (22).

6. Turbojet (1) according to one of claims 1 to 5, comprising at least one controllable movement member (33, 34, 43, 44) so as to move at least one cover member (31, 41, 32, 42, 51, 52-1, 52-2) from the covered position (C1) to the uncovered position (C2).

7. Method of using a turbojet according to one of claims 1 to 6, comprising, during a reverse thrust phase of said turbojet (1), a step of circulating an air flow in the circulation duct (3, 4, 5) from the inner wall (21) and/or the outer wall (22) to the air intake lip (23) so as to promote the reverse thrust phase.

8. Method of using a turbojet according to claim 7, wherein the cover member (31, 41, 51, 32, 42, 52-1, 52-2) is in the covered position (C1) during a thrust phase of the turbojet (1), so that the air intake (2) has an aerodynamic profile so as to guide the internal air flow (F-INT) on the inner wall (21), the method comprising, during a reverse thrust phase of said turbojet (1), a step of moving the cover member (31, 41, 51, 32, 42, 52-1, 52-2) to the uncovered position (C2) so as to promote the reverse thrust phase.
